# EUROPEAN PATENT APPLICATION

(11) **EP 4 546 672 A1**
(43) Date of publication of application: **30.04.2025**
(21) Application number: 23844781.7
(22) Date of filing: 08.02.2023
(51) Int. Cl.: H04J 3/06

(54) **COMMUNICATION METHOD AND DEVICE**

(30) Priority: 28.07.2022 CN 202210898037
(71) Applicant: Huawei Technologies Co., Ltd., Shenzhen, Guangdong 518129 (CN)
(72) Inventor: CHEN, Yan, Shenzhen, Guangdong 518129 (CN); YUE, Huawei, Shenzhen, Guangdong 518129 (CN); TANG, Yunshuai, Shenzhen, Guangdong 518129 (CN); ZHU, Weiwei, Shenzhen, Guangdong 518129 (CN); CHAI, Fangming, Shenzhen, Guangdong 518129 (CN); GAO, Lin, Shenzhen, Guangdong 518129 (CN)
(74) Representative: Maiwald GmbH
(86) International application number: PCT/CN2023/074993
(87) International publication number: WO 2024/021562

(57) **Abstract**

This application provides a communication method and apparatus. The method includes: A grant node determines indication information if in a discontinuous reception mode, and the grant node sends the indication information, where the indication information indicates an offset between a first radio frame and a second radio frame in a reference super frame, and the first radio frame is related to a moment at which the indication information is sent. In the method, the grant node may indicate a time difference between the first radio frame and the second radio frame by indicating the offset between the first radio frame and the second radio frame in the reference super frame, so that a terminal node can sense a time offset between the terminal node and the grant node. This implements time synchronization between a plurality of terminal nodes by using the grant node as a reference.

## Description

### CROSS-REFERENCE TO RELATED APPLICATIONS

This application claims priority to Chinese Patent Application No. 202210898037.5, filed with the China National Intellectual Property Administration on July 28, 2022 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

A vehicle-mounted wireless short-range communication system includes a grant (Grant, G) node and a terminal (Terminal, T) node. The G node is a node that sends data scheduling information and that is in the vehicle-mounted wireless short-range communication system, and the T node is a node that receives the data scheduling information and sends data based on the data scheduling information and that is in the vehicle-mounted wireless short-range communication system. For ease of description, a short-range protocol in the vehicle-mounted wireless short-range communication system is referred to as a GT protocol.

The GT protocol, similar to wireless fidelity (wireless fidelity, Wi-Fi), supports operation on an unlicensed (unlicensed) frequency band. A discontinuous reception mode is introduced into the GT protocol, to ensure coexistence of a node in the GT protocol and a node in a Wi-Fi protocol on the unlicensed frequency band. The node in the GT protocol and the node in the Wi-Fi protocol coexist based on time for preempting air interface.

Time for the G node to preempt an air interface is random, and super frame numbers indicated by system messages are accumulated only within operating time when the air interface is preempted. Consequently, the T node cannot obtain, based only on a current super frame number, accurate relative time between the current super frame number and a super frame number, numbered 0, corresponding to the G node. Further, after different T nodes access the G node, because the G node may have non-operating time within an access time interval between the T nodes, the T nodes cannot obtain an accurate access time interval based only on super frame numbers of respective access moments. This problem is a great limitation in an application scenario like a combination of smart speakers.

### SUMMARY

Embodiments of this application provide a communication method and apparatus, to implement time synchronization between terminal nodes in a vehicle-mounted wireless short-range communication system.

According to a first aspect, this application provides a communication method. The method is applied to a vehicle-mounted wireless short-range communication system including a grant node, and includes the following process: The grant node determines indication information if in a discontinuous reception mode, and the grant node sends the indication information, where the indication information indicates an offset between a first radio frame and a second radio frame in a reference super frame, and the first radio frame is related to a moment at which the indication information is sent.

The discontinuous reception mode indicates supporting transmission, on discontinuous time resources, of super frames whose super frame numbers are continuous. For example, a #N super frame (namely, a super frame numbered N) and a #N-1 super frame (namely, a super frame numbered N-1) that are used by the grant node for data transmission are discontinuous in time.

The vehicle-mounted wireless short-range communication system usually further includes a terminal node, and the grant node may send the indication information to the terminal node. For example, the grant node may send the indication information in a broadcast, multicast, or unicast manner.

In a possible implementation, the grant node may continuously send the indication information in operating time. For example, time at which the grant node preempts a transmission resource is the operating time of the grant node.

In a possible implementation, after identifying access of the terminal node, the grant node sends the indication information to the terminal node. After the terminal node accesses the grant node, the terminal node and grant node are in a same communication domain.

For example, the reference super frame is a super frame numbered 0.

In the method, the grant node may indicate a time difference between the first radio frame and the second radio frame by indicating the offset between the first radio frame and the second radio frame in the reference super frame, so that the terminal node can sense a time offset between the terminal node and the grant node. This implements time synchronization between a plurality of terminal nodes by using the grant node as a reference.

In a possible implementation, the offset between the first radio frame and the second radio frame in the reference super frame is a quantity of radio frames between the first radio frame and the second radio frame in the reference super frame. In the vehicle-mounted wireless short-range communication system, preamble information and a super frame are aligned at a time granularity of a radio frame. Therefore, the offset or the time difference can be indicated by using the quantity of radio frames between the first radio frame and the second radio frame, and when the quantity of radio frames is for indication, a quantity of bits occupied by the indication information can be reduced, and communication overheads are reduced.

In a possible implementation, when sending the indication information, the grant node may send preamble information to the terminal node, where a variable-length part of the preamble information carries the indication information. A length of the variable-length part is not fixed. The variable-length part carries the indication information, without additionally increasing a bit rate of the preamble information. This can ensure demodulation performance of the system, and help ensure stability of the communication system. In addition, no additional air interface resource is occupied, and communication overheads can be reduced.

In a possible implementation, the variable-length part includes a grant link system message Glink-SystemInfo-Message, and the Glink-SystemInfo-Message includes the indication information. In this implementation, a system message transmitted by using the variable-length part may carry the indication information, to implement time synchronization between the terminal nodes.

In a possible implementation, the indication information specifically indicates a quantity of radio frames between the 1^{st} radio frame for transmitting the variable-length part (that is, the first radio frame is the 1^{st} radio frame for the variable-length part of the preamble information) and the second radio frame in the super frame numbered 0; or the indication information specifically indicates a quantity of radio frames between the last radio frame for transmitting the variable-length part (that is, the first radio frame is the last radio frame for the variable-length part of the preamble information) and the second radio frame in the super frame numbered 0; or the indication information specifically indicates a quantity of radio frames between the 1^{st} radio frame in the 1^{st} super frame for transmission after the variable-length part (that is, the first radio frame is the 1^{st} radio frame in the 1^{st} super frame for transmission after the variable-length part of the preamble information) and the second radio frame in the super frame numbered 0; or the indication information specifically indicates a quantity of radio frames between the 1^{st} radio frame for transmitting the preamble information (that is, the first radio frame is the 1^{st} radio frame for the preamble information) and the second radio frame in the super frame numbered 0.

In a possible implementation, when sending the indication information, the grant node may send preamble information to the terminal node, where a fixed-length part of the preamble information carries the indication information. In this implementation, the fixed-length part may carry the indication information, to implement time synchronization between the terminal nodes.

In a possible implementation, the indication information specifically indicates a quantity of radio frames between the 1^{st} radio frame for transmitting the fixed-length part (that is, the first radio frame is the 1^{st} radio frame for the fixed-length part of the preamble information) and the second radio frame in the super frame numbered 0; or the indication information specifically indicates a quantity of radio frames between the last radio frame for transmitting the fixed-length part (that is, the first radio frame is the last radio frame for the fixed-length part of the preamble information) and the second radio frame in the super frame numbered 0; or the indication information specifically indicates a quantity of radio frames between the 1^{st} radio frame in the 1^{st} super frame for transmission after the fixed-length part (that is, the first radio frame is the 1^{st} radio frame in the 1^{st} super frame for transmission after the fixed-length part of the preamble information) and the second radio frame in the super frame numbered 0.

In a possible implementation, when sending the indication information, the grant node may send the indication information in a system message in a first super frame, where the first super frame is a 1^{st} super frame after preamble information. In this implementation, the system message transmitted by using the super frame may carry the indication information, to implement time synchronization between the terminal nodes.

In a possible implementation, the indication information specifically indicates a quantity of radio frames between a first radio frame in the first super frame for transmitting the system message (that is, the first radio frame is the 1^{st} radio frame in the first super frame) and the second radio frame in the super frame numbered 0; or the indication information specifically indicates a quantity of radio frames between the 1^{st} radio frame in a plurality of radio frames for transmitting the system message (that is, the first radio frame is the 1^{st} radio frame in the plurality of radio frames in the first super frame that are for transmitting the system message) and the second radio frame in the super frame numbered 0; or the indication information specifically indicates a quantity of radio frames between the last radio frame in a plurality of radio frames for transmitting the system message (that is, the first radio frame is the last radio frame in the plurality of radio frames in the first super frame that are for transmitting the system message) and the second radio frame in the super frame numbered 0.

In a possible implementation, when sending the indication information, the grant node may broadcast a time service management frame, where the time service management frame is for a time service, and the time service management frame carries the indication information. In this implementation, the time service management frame carries the indication information, to implement time synchronization between the terminal nodes.

In a possible implementation, when sending the indication information, the grant node may send a link control layer data packet, where a header of the link control layer data packet carries the indication information. In this implementation, the link control layer header may carry the indication information, to implement time synchronization between the terminal nodes.

According to a second aspect, this application provides a communication method. The method is applied to a vehicle-mounted wireless short-range communication system including a terminal node, and includes the following process: The terminal node receives indication information if in a discontinuous reception mode, where the indication information indicates an offset between a first radio frame and a second radio frame in a reference super frame, and the first radio frame is related to a moment at which the grant node sends the indication information; and the terminal node determines the offset between the first radio frame and the second radio frame based on the indication information.

In a possible implementation, the offset between the first radio frame and the second radio frame in the reference super frame is a quantity of radio frames between the first radio frame and the second radio frame in the reference super frame.

In a possible implementation, when receiving the indication information, the terminal node may receive preamble information, where a variable-length part of the preamble information carries the indication information.

In a possible implementation, the variable-length part includes a grant link system message Glink-SystemInfo-Message, and the Glink-SystemInfo-Message includes the indication information.

In a possible implementation, the first radio frame is the 1^{st} radio frame for the variable-length part of the preamble information; or the last radio frame for the variable-length part of the preamble information; or the 1^{st} radio frame in the 1^{st} super frame for transmission after the variable-length part of the preamble information; or the 1^{st} radio frame for the preamble information.

In a possible implementation, when receiving the indication information, the terminal node may receive preamble information, where a fixed-length part of the preamble information carries the indication information.

In a possible implementation, the first radio frame is the 1^{st} radio frame for the fixed-length part of the preamble information; or the last radio frame for the fixed-length part of the preamble information; or the 1^{st} radio frame in the 1^{st} super frame for transmission after the fixed-length part of the preamble information.

In a possible implementation, when receiving the indication information, the terminal node may receive a first super frame, where a system message in the first super frame carries the indication information, and the first super frame is the 1^{st} super frame after preamble information.

In a possible implementation, the first radio frame is the 1^{st} radio frame in the first super frame; or the 1^{st} radio frame in a plurality of radio frames in the first super frame that are for transmitting the system message; or the last radio frame in a plurality of radio frames in the first super frame that are for transmitting the system message.

In a possible implementation, when receiving the indication information, the terminal node may receive a time service management frame, where the time service management frame is for a time service, and the time service management frame carries the indication information.

In a possible implementation, when receiving the indication information, the terminal node may receive a link control layer data packet, where a header of the link control layer data packet carries the indication information.

According to a third aspect, a communication apparatus is provided. The communication apparatus may be a grant node or a terminal node, or a chip disposed in the grant node or the terminal node. The communication apparatus may implement the method provided in any one of the foregoing aspects.

The communication apparatus includes a corresponding module, unit, or means (means) for implementing the foregoing method. The module, unit, or means may be implemented by using hardware or software, or implemented by using hardware by executing corresponding software. The hardware or the software includes one or more modules or units corresponding to the foregoing functions.

According to a fourth aspect, a communication apparatus is provided, and includes a transceiver unit. Optionally, the communication apparatus may further include a processing unit. The communication apparatus may implement the method provided in any one of the aspects or the implementations of the aspects.

According to a fifth aspect, a communication apparatus is provided, and includes a processor. The processor may be configured to perform the method provided in any one of the foregoing aspects or the implementations of the foregoing aspects. Optionally, the apparatus further includes a memory. The processor is coupled to the memory. The memory is configured to store a computer program or instructions. The processor may execute the program or the instructions in the memory, so that the apparatus can perform the method provided in any one of the foregoing aspects or the implementations of the foregoing aspects.

According to a sixth aspect, a communication apparatus is provided. The apparatus includes an interface circuit and a logic circuit, and the logic circuit is coupled to the interface circuit. The interface circuit may be a code/data read/write interface circuit. The interface circuit is configured to: receive computer-executable instructions (the computer-executable instructions are stored in a memory, and may be directly read from the memory, or may be read through another component) and transmit the computer-executable instructions to the logic circuit, so that the logic circuit runs the computer-executable instructions to perform the method provided in any one of the foregoing aspects or the implementations of the foregoing aspects.

In some possible designs, the communication apparatus may be a chip or a chip system.

According to a seventh aspect, a communication apparatus is provided, and includes a processor. The processor is coupled to a memory. The processor is configured to read instructions stored in the memory, and can receive a signal through a receiver, and transmit a signal through a transmitter, to perform the method provided in any one of the foregoing aspects or the implementations of the foregoing aspects.

Optionally, there may be one or more processors, and one or more memories. Optionally, the memory may be integrated with the processor, or the memory and the processor are separately disposed.

In a specific implementation process, the memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in this application.

The communication apparatus may be a chip, and the processor may be implemented by using hardware, or may be implemented by using software. When the processor is implemented by using hardware, the processor may be a logic circuit, an integrated circuit, or the like. When the processor is implemented by using software, the processor may be a general-purpose processor, and is implemented by reading software code stored in the memory. The memory may be integrated in the processor, or may be located outside the processor and exist independently.

According to an eighth aspect, a processor is provided, and includes an input circuit, an output circuit, and a processing circuit. The processing circuit is configured to: receive a signal through the input circuit, and transmit a signal through the output circuit, so that the processor performs the method provided in any one of the foregoing aspects or the implementations of the foregoing aspects.

In a specific implementation process, the processor may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and various circuits are not limited in this application.

According to a ninth aspect, a communication apparatus is provided, and includes a logic circuit and an input/output interface. The input/output interface is configured to communicate with a module other than the communication apparatus. The logic circuit is configured to run a computer program or instructions to perform the method provided in any design of any one of the foregoing aspects. The communication apparatus may be the grant node or the terminal node in any one of the foregoing aspects, an apparatus including the grant node or the terminal node, or an apparatus included in the grant node or the terminal node, for example, a chip.

Alternatively, the input/output interface may be a code/data read/write interface circuit, or a communication interface. The input/output interface is configured to: receive a computer program or instructions (the computer program or instructions are stored in a memory, and may be directly read from the memory, or may be read through another component), and transmit the computer program or instructions to the input/output interface, so that the input/output interface runs the computer program or instructions to perform the method according to any one of the foregoing aspects.

Optionally, the communication apparatus may be a chip.

According to a tenth aspect, a computer program product is provided. The computer program product includes a computer program (which may also be referred to as code or instructions), and when the computer program is run, a computer is enabled to perform the method provided in any one of the foregoing aspects or the implementations of the foregoing aspects.

According to an eleventh aspect, a computer-readable medium is provided. The computer-readable medium stores a computer program (which may also be referred to as code or instructions), and when the computer program is run on a computer, the computer is enabled to perform the method provided in any one of the foregoing aspects or the implementations of the foregoing aspects.

According to a twelfth aspect, a chip system is provided. The chip system includes a processor and an interface, and is configured to support a communication apparatus in implementing a function provided by any one of the foregoing aspects or the implementations of the foregoing aspects. In a possible design, the chip system further includes a memory, configured to store necessary information and data of the foregoing communication apparatus. The chip system may include a chip, or may include a chip and another discrete component.

According to a thirteenth aspect, a chip apparatus is provided. The chip apparatus includes an input interface and/or an output interface. The input interface may implement a receiving function provided in any one of the foregoing aspects or the implementations of the foregoing aspects, and the output interface may implement a sending function provided in any one of the foregoing aspects or the implementations of the foregoing aspects.

According to a fourteenth aspect, a functional entity is provided. The functional entity is configured to implement the method provided in any one of the foregoing aspects or the implementations of the foregoing aspects.

According to a fifteenth aspect, a communication system is provided, and includes a grant node configured to perform the method in the first aspect and a terminal node configured to perform the method in the second aspect.

For technical effect brought by any implementation of the second aspect to the fifteenth aspect, refer to the technical effect brought by the first aspect. Details are not described herein again.

### BRIEF DESCRIPTION OF DRAWINGS

FIG. 1 is a diagram of an architecture of a vehicle-mounted wireless short-range communication system;
FIG. 2 is a diagram of an architecture of a vehicle-mounted wireless short-range communication system;
FIG. 3 is a diagram of operation of a GT protocol on a frequency band;
FIG. 4 is a diagram in which T nodes access a G node;
FIG. 5 is a diagram of a communication process according to an embodiment of this application;
FIG. 6 is a diagram of a PDU format in a transmission mode 1 according to an embodiment of this application;
FIG. 7 is a diagram of a PDU format in a transmission mode 1 according to an embodiment of this application;
FIG. 8 is a diagram of a PDU format in a transmission mode 2 according to an embodiment of this application;
FIG. 9 is a diagram of a PDU format in a transmission mode 2 according to an embodiment of this application;
FIG. 10 is a diagram of a structure of a communication apparatus according to an embodiment of this application;
FIG. 11 is a diagram of a structure of a communication apparatus according to an embodiment of this application; and
FIG. 12 is a diagram of a structure of a communication apparatus according to an embodiment of this application.

### DESCRIPTION OF EMBODIMENTS

The following further describes in detail this application with reference to accompanying drawings.

Technical solutions in embodiments of this application are applied to but are not limited to a vehicle-mounted wireless short-range communication system. The vehicle-mounted wireless short-range communication technology (also referred to as a SparkLink technology) has advantages such as ultra-low latency, ultra-high reliability, and precise synchronization, and is applicable to application in scenarios such as an intelligent vehicle, a smart home, a smart terminal, and smart manufacturing. For example, applications in an intelligent vehicle scenario include an immersive vehicle-mounted sound field & noise reduction, wireless interactive projection, 360-degree panoramic surround view, and the like, and can implement immersive interaction experience and improve vehicle safety.

In some possible implementations, a vehicle-mounted wireless short-range communication system may be used in combination with a mobile communication system. For example, the mobile communication system includes but is not limited to a 4th generation (4th Generation, 4G) communication system (for example, a long term evolution (long term evolution, LTE) system), a 5th generation (5th generation, 5G) mobile communication system (for example, a new radio (new radio, NR) system), and a future mobile communication system, such as a 6G mobile communication system.

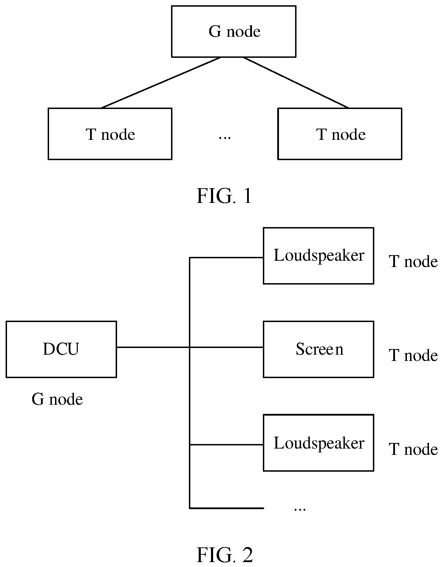

As shown in FIG. 1, a vehicle-mounted wireless short-range communication system includes a G node and T nodes. The G node is a node sending data scheduling information in the vehicle-mounted wireless short-range communication system, and the T node is a node receiving the data scheduling information and sending data based on the data scheduling information in the vehicle-mounted wireless short-range communication system. There may be one or more G nodes and T nodes. Generally, there is one G node, and there are a plurality of T nodes. An intelligent vehicle scenario is used as an example. An architecture of a vehicle-mounted wireless short-range communication system is shown in FIG. 2. A G node includes a domain control unit (domain control unit, DCU) of a vehicle, and T nodes include a screen, a loudspeaker, and the like of the vehicle. The domain control unit is a core of functional domains of the vehicle. The functional domains may be classified into a power domain (Power Train), a chassis domain (Chassis), a vehicle body domain (Body/Comfort), a cockpit domain (Cockpit/Infotainment), and an advanced driver assistance system (advanced driver assistance system, ADAS); or the functional domains may be classified into a vehicle domain controller (vehicle domain controller, VDC), an intelligent driving domain controller (ADAS\AD domain controller, ADC), and an intelligent cockpit domain controller (cockpit domain controller, CDC).

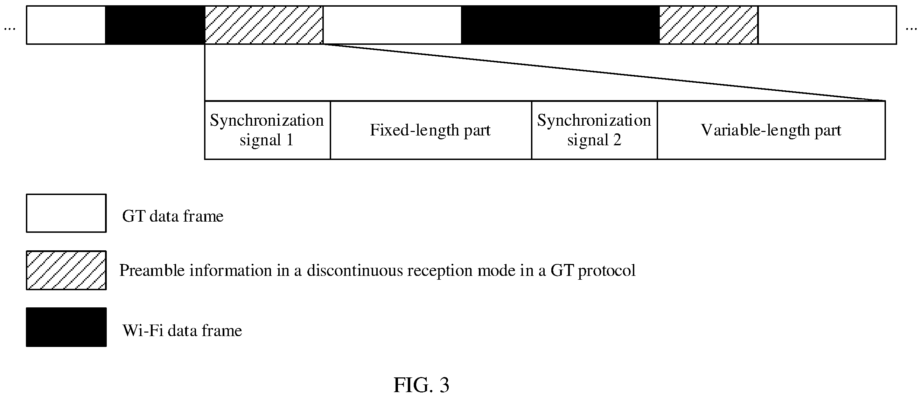

For ease of description, the vehicle-mounted wireless short-range communication system is referred to as a GT system, and a short-range protocol in the vehicle-mounted wireless short-range communication system is referred to as a GT protocol. The GT protocol, similar to a Wi-Fi protocol, supports operation on an unlicensed frequency band. A discontinuous reception mode is introduced into the GT protocol, that is, transmission, on discontinuous time resources, of super frames whose super frame numbers are continuous is supported, to ensure coexistence of a node in the GT protocol and a node in the Wi-Fi protocol on the unlicensed frequency band. As shown in FIG. 3, a white part is time occupied for transmission of a data frame in the GT protocol (GT data frame for short), a black part is time occupied for transmission of a data frame in the Wi-Fi protocol (Wi-Fi data frame for short), and a shaded part is time occupied for transmission of preamble information in the discontinuous reception mode in the GT protocol. The preamble information includes a synchronization (synchronization, sync) signal 1, a fixed-length pan, a synchronization signal 2, and a variable-length part. The Wi-Fi node and the GT node implement coexistence by preempting air interface time.

In the discontinuous reception mode, the GT system coexists with another system like a Wi-Fi system by preempting the air interface time. As a result, different T nodes cannot obtain an accurate access time interval after accessing the G node in sequence.

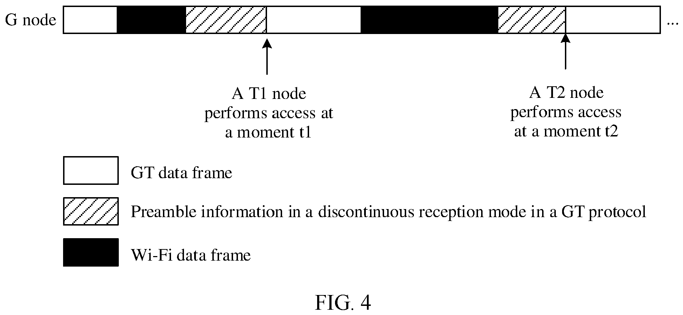

For example, as shown in FIG. 4, a T1 node accesses a G node at a moment t1, and a T2 node accesses the G node at a moment t2. However, the T1 node and the T2 node do not sense time for accessing the G node. If the T1 node and the T2 node need to play a same frame of stereo sound from the G node at a same moment, because it is difficult to determine an access time interval between the T nodes, an additional latency difference may exist in playing between the T1 node and the T2 node, and stereo sound effect is damaged.

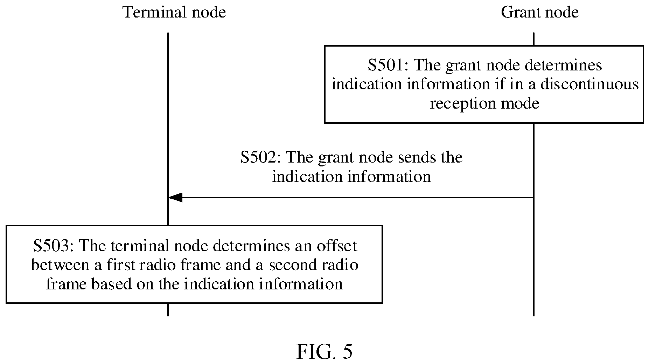

In view of this, embodiments of this application provide a communication method, to implement time synchronization between T nodes in a vehicle-mounted wireless short-range communication system. FIG. 5 is a diagram of a communication process, including the following steps.

S501: A grant node determines indication information if in a discontinuous reception mode.

S502: The grant node sends the indication information. Correspondingly, a terminal node receives the indication information.

The discontinuous reception mode indicates supporting transmission, on discontinuous time resources, of super frames whose super frame numbers are continuous. Therefore, if in the discontinuous reception mode, the grant node may indicate an offset between a first radio frame and a second radio frame in a reference super frame via the indication information.

The first radio frame is a radio frame corresponding to a moment at which the indication information is sent, that is, the first radio frame is related to a moment at which the indication information is sent, or the first radio frame is related to a location (for example, a radio frame in which the indication information is located) of the indication information, for example, the first radio frame and the radio frame in which the indication information is located are a same radio frame, or the first radio frame and the radio frame in which the indication information is located are not a same radio frame, but according to a preset rule, a location of the first radio frame may be determined based on the radio frame in which the indication information is located. For example, the first radio frame may be the n^{th} radio frame in a super frame for sending the indication information, where n=1, ..., or N, N is a positive integer, and N is less than or equal to a total quantity of radio frames in the super frame. When n is 1, the 1^{st} radio frame is a first radio frame in the super frame; or when n is N, the first radio frame is the last radio frame in the super frame.

A value of a super frame number of the reference super frame is a non-negative integer. For example, the reference super frame is a super frame numbered 0, namely, a super frame whose super frame number is 0. In a GT system, a super frame number is usually indicated by using 16 bits (bits). It may be understood that the super frame numbered 0 is merely an example, and another super frame number (for example, but not limited to a super frame numbered 1) that can implement time synchronization between a plurality of terminal nodes is also applicable to this embodiment of this application.

The second radio frame in the reference super frame may be the m^{th} radio frame in the reference super frame, where m=1, ..., and M, M is a positive integer, and M is less than or equal to a total quantity of radio frames in the reference super frame. Generally, in the GT system, 1 super frame=1 millisecond (millisecond, ms)=48 radio frames=48*640 sampling points=30720 sampling points, that is, 1 second (second, s)=1000 super frames=30720000 sampling points, and a symbol rate is 30.72 megahertz (megahertz, MHz). For example, M is a positive integer less than or equal to 48. When m is 1, the second radio frame is the 1^{st} radio frame in the reference super frame; or when m is 48, the second radio frame is the last radio frame in the reference super frame.

In a possible implementation, in S502, the grant node may continuously send the indication information.

In another possible implementation, in S502, at least one terminal node accesses the grant node, and after identifying access of the at least one terminal node, the grant node sends the indication information to the at least one terminal node. That the terminal node accesses the grant node may be that the terminal node joins a communication domain of the grant node. In other words, the terminal device and the grant node accessed by the terminal device are in a same communication domain.

S503: The terminal node determines the offset between the first radio frame and the second radio frame based on the indication information.

In the method, the grant node may indicate a time difference between the first radio frame and the second radio frame by indicating the offset between the first radio frame and the second radio frame in the reference super frame, so that the terminal node can sense a time offset between the terminal node and the grant node. This implements time synchronization between the plurality of terminal nodes by using the grant node as a reference.

In a possible implementation, the indication information may specifically indicate a quantity of radio frames between the first radio frame and the second radio frame in the reference super frame, that is, the offset between the first radio frame and the second radio frame in the reference super frame is a quantity of radio frames between the first radio frame and the second radio frame in the reference super frame. In other words, the quantity of radio frames represents the offset herein, to indicate the time difference between the first radio frame and the second radio frame. Indication of the quantity of radio frames occupies fewer bits, and communication overheads are lower. For example, the indication information is a radio frame number field.

The GT system supports transmission, on discontinuous time resources, of super frames whose super frame numbers are continuous. When a #N super frame (namely, a super frame numbered N or a super frame number is N) and a #N-1 super frame (namely, a super frame numbered N-1 or a super frame number is N-1) that are used by the grant node for data transmission are discontinuous in time, the grant node sends preamble information before a time resource corresponding to the #N super frame. In the discontinuous reception mode, a start moment of the preamble information is aligned at a time granularity of a radio frame, that is, a start moment of the preamble information and a start moment of the super frame numbered 0 are separated by an integer quantity of radio frames. Because a length of the preamble information is the integer quantity of radio frames, super frames after the preamble information are also aligned at the time granularity of the radio frame. Therefore, in this implementation, the offset (or the time difference) between the first radio frame and the second radio frame may be indicated by using the quantity of radio frames.

A quantity of bits occupied by the indication information is a positive integer.

For example, the indication information may occupy 22 bits. In the GT system, the super frame number is usually indicated by using 16 bits. The super frame number appears repeatedly after every 2¹⁶ super frames. That is, the super frame number appears repeatedly after every (2¹⁶=65536) super frames, namely, 65.536 seconds. Each super frame is 48 radio frames, and 16 bits may represent 2¹⁶*48 radio frames. Therefore, the 2¹⁶*48 radio frames may be represented by using 22 (that is, 16+6) bits, that is, the indication information may be represented by using 22 bits. This can avoid repeated indication when the quantity of radio frames between the first radio frame and the second radio frame is indicated.

For another example, the indication information may occupy 28 bits. In the discontinuous reception mode, time-division multiplexing is used in the GT system and the Wi-Fi system. In some scenarios (for example, a scenario in which super frames are discontinuous), time-division usage of GT super frames may be low, the indication information is represented by using 28 bits (it is assumed that a quantity of bits of a radio frame is increased by 6 bits based on 22 bits). Correspondingly, this can support a scenario in which GT usage is approximately 1.6%.

For another example, the indication information may occupy 32 bits.

The following describes S502 in several possible implementations.

Implementation 1: The indication information is carried in preamble information. To be specific, in S502, the grant node sends the preamble information, and correspondingly, the terminal node receives the preamble information.

The preamble information in the GT system includes but is not limited to one or more of a part of a first group of synchronization sequences (for example, sync1 in FIG. 3), a fixed-length part (sig1 for short below), a part of a second group of synchronization sequences (for example, sync2 in FIG. 3), a variable-length part (sig2 for short below), and the like.

In both parts of the first group of synchronization sequences and the second group of synchronization sequences, transmitted content is synchronization sequences, no information bit is transmitted, and usually no signaling field is newly added. Therefore, the indication information may be carried in the fixed-length part and/or the variable-length part of the preamble information.

Implementation 1.1: The variable-length part (sig2) of the preamble information carries the indication information.

In the GT system, the variable-length part includes a valid data symbol and a padding part, and the valid data symbol uses a cyclic prefix (cyclic prefix, CP) -orthogonal frequency division multiplexing (orthogonal frequency division multiplexing, OFDM) symbol of an extended cyclic prefix. It is assumed that a start moment of the preamble information is aligned at a time length granularity of 640 time stamps (time stamps, Ts), and a length of the padding part of the variable-length part is a shortest length that enables a start moment of a super frame to be aligned at the time length granularity of 640 Ts. For example, the length of the padding part may be 0.

In a possible implementation, a grant link system message is sent in the variable-length part, and the grant link system message includes the indication information.

For example, the grant link system message is a Glink-SystemInfo-Message, the Glink-SystemInfo-Message includes the indication information. Glink is a communication link from the grant node to the terminal node, and the link may carry a data channel, a control channel, a broadcast channel, a synchronization signal, and the like from the grant node to the terminal node.

The grant link system message mainly carries a communication domain system message (DomainSysInfo). The communication domain system message is generally sent by a grant node in a communication domain to a terminal node in the communication domain of the grant node in a broadcast manner. Optionally, the grant link system message includes a communication domain system message, and the communication domain system message includes the indication information.

The Glink-SystemInfo-Message in the GT system is shown as follows, where the Glink-SystemInfo-Message includes a Glink-SystemInfo-Message-information element (Information Element, IE), and the Glink-SystemInfo-Message-IE includes DomainSysInfo:

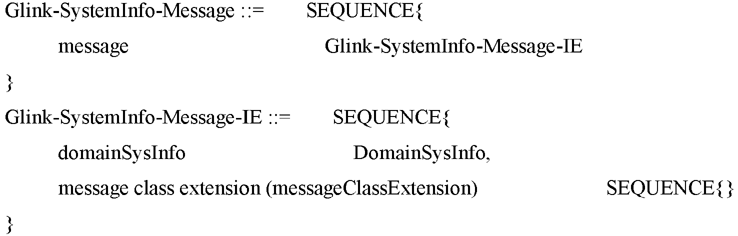

DomainSysInfo in the GT system is shown as follows, where DomainSysInfo includes communication domain system message information elements (DomainSysInfo-IEs):

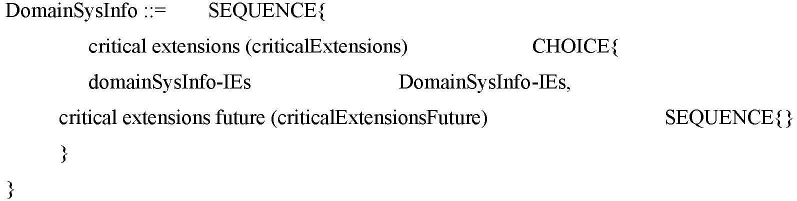

Optionally, the indication information may be newly added to the DomainSysInfo-IEs. For example, the indication information is a radio frame number field, and a field type is optional (OPTIONAL). For example, the DomainSysInfo-IEs are shown as follows, and include a communication domain system message period (domainSysInfoPeriod) field, a communication domain system message duration (domainSysInfoOnDuration) field, a communication domain name (domainName) field, a communication domain identifier (domainID) field, a multi-communication domain synchronization information (multiDomainSyncInfo) field, a carrier channel configuration (carrierChannelConf) field, a non-contention resource (nonContentionAccessResource) field, a nominal configuration (p0-NominalConfig) field, a resource set configuration (ack-ResourceSetConf) field, a super frame mode (sr-SuperFrameMode) field, a domain coordination (domainCoordination) field, an access control (accessControl) field, a key negotiation (key AlgNegotiation) field, a test mode indication (testModeIndication) field, a non-critical extension (nonCriticalExtension) field, and a radio frame number field.

Enumerated (ENUMERATED) values of domainSysInfoPeriod include SF64, SF128, SF256, and SF512, where SF64 indicates that a start number of a super frame for sending DomainSysInfo is a multiple of 64, SF128 indicates that a start number of a super frame for sending DomainSysInfo is a multiple of 128, SF256 indicates that a start number of a super frame for sending DomainSysInfo is a multiple of 256, and SF512 indicates that a start number of a super frame for sending DomainSysInfo is a multiple of 512. Enumerated values of domainSysInfoOnDuration include SF64, SF128, SF256, and SF512. A length of the multiDomainSyncInfo field ranges from 1 to 25 or is fixed to 8. A length of the accessControl field is fixed to 4. A length of the key AlgNegotiation field is fixed to 32. Enumerated values of the testModeIndication field are true (true) and false (false). The radio frame number field occupies 32 bits, and a field type is OPTIONAL. 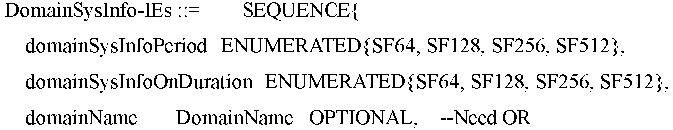 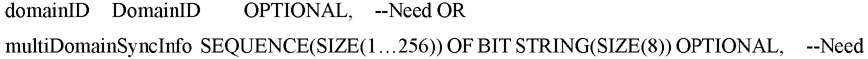 OR

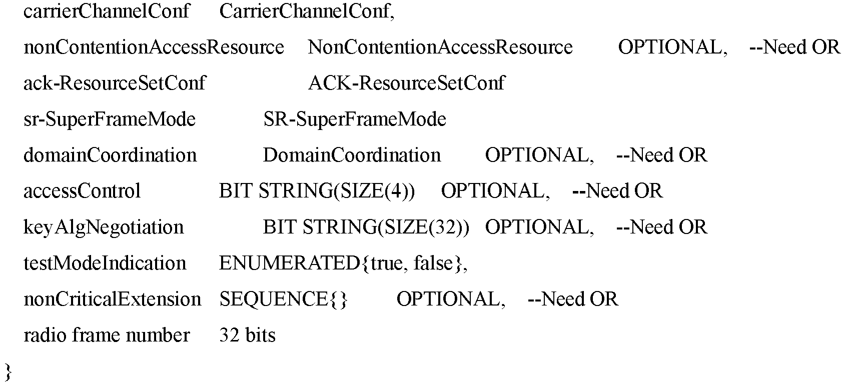

In another possible implementation, the variable-length part includes a newly added message, and the newly added message includes the indication information. For example, the newly added message is a Sig2-extend-message.

The newly added message is outside of the grant link system message. For example, a quantity of bits occupied by the newly added message is added (for example, 22 bits, 28 bits, or 32 bits are newly added) before the grant link system message. For another example, a quantity of bits occupied by the newly added message is added (for example, 22 bits, 28 bits, or 32 bits are newly added) after the grant link system message. For another example, the newly added message may be defined in an ASN.1 format, and may be represented as follows:

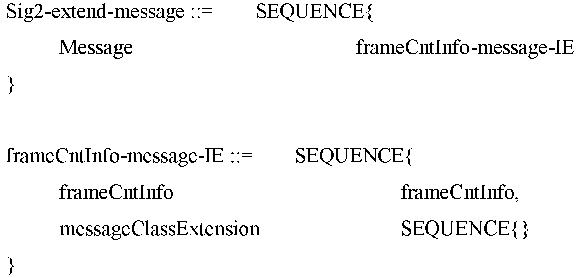

A specific meaning of the indication information (for example, a radio frame number field) includes but is not limited to one of the following.

The indication information specifically indicates an offset/a quantity of radio frames between the n^{th} radio frame for transmitting the variable-length part and the second radio frame (for example, the m^{th} radio frame) in the reference super frame, that is, the first radio frame is the n^{th} radio frame for the variable-length part of the preamble information.

The indication information specifically indicates an offset/a quantity of radio frames between the 1^{st} radio frame (for example, when n=1) for transmitting the variable-length part and the second radio frame (for example, the 1^{st} radio frame, for example, when m=1) in the reference super frame, that is, the first radio frame is the 1^{st} radio frame for the variable-length part of the preamble information.

The indication information specifically indicates an offset/a quantity of radio frames between the last radio frame (for example, when n=N) for transmitting the variable-length part and the second radio frame in the reference super frame, that is, the first radio frame is the last radio frame for the variable-length part of the preamble information.

The indication information specifically indicates an offset/a quantity of radio frames between the 1^{st} radio frame (or another radio frame in the 1^{st} super frame) in a second super frame (for example, the 1^{st} super frame or another super frame) for transmission after the variable-length part and the second radio frame in the reference super frame, that is, the first radio frame is the 1^{st} radio frame in the second super frame (for example, the 1^{st} super frame) for transmission after the variable-length part of the preamble information.

The indication information specifically indicates an offset/a quantity of radio frames between the 1^{st} radio frame (or another radio frame) for transmitting the preamble information and the second radio frame in the reference super frame, that is, the first radio frame is the 1^{st} radio frame for the preamble information.

In Implementation 1.1, the indication information is carried in the variable-length part, and a bit rate of another part (the first group of synchronization sequences, the second group of synchronization sequences, or the fixed-length part) is not increased, and demodulation performance of the another part is not affected. This helps ensure stability of a communication system, and does not additionally occupy an air interface resource and does not occupy excessive overheads.

Implementation 1.2: The fixed-length part (sig1) of the preamble information carries the indication information.

In the GT system, the fixed-length part includes 14 CP-OFDM symbols, and 131 information bits are transmitted in total, and are equivalent to a length of two radio frames. In this implementation, the indication information may be newly added to the fixed-length part. For example, a quantity of bits occupied by the indication information is increased (for example, 22 bits, 28 bits, or 32 bits are increased) in the fixed-length part, that is, the length of the fixed-length part is increased from 131 bits to 153 bits, or increased to 159 bits, or increased to 163 bits. For example, the fixed-length part may be added after the 131 bits of the fixed-length part, or may be added before the 131 bits of the fixed-length part.

A specific meaning of the indication information (for example, a radio frame number field) includes but is not limited to one of the following.

The indication information specifically indicates an offset/a quantity of radio frames between the n^{th} radio frame for transmitting the fixed-length part and the second radio frame (for example, the m^{th} radio frame) in the reference super frame, that is, the first radio frame is the n^{th} radio frame for the fixed-length part of the preamble information.

The indication information specifically indicates an offset/a quantity of radio frames between the 1^{st} radio frame (for example, when n= 1) for transmitting the fixed-length part and the second radio frame (for example, the 1^{st} radio frame, for example, when m= 1) in the reference super frame, that is, the first radio frame is the 1^{st} radio frame for the fixed-length part of the preamble information.

The indication information specifically indicates an offset/a quantity of radio frames between the last radio frame (for example, when n=N) for transmitting the fixed-length part and the second radio frame in the reference super frame, that is, the first radio frame is the last radio frame for the fixed-length part of the preamble information.

The indication information specifically indicates an offset/a quantity of radio frames between the 1^{st} radio frame (or another radio frame in the 1^{st} super frame) in a third super frame (for example, the 1^{st} super frame or another super frame) for transmission after the fixed-length part and the second radio frame in the reference super frame, that is, the first radio frame is the first radio frame in the third super frame (for example, the 1^{st} super frame) for transmission after the fixed-length part of the preamble information.

The indication information specifically indicates an offset/a quantity of radio frames between the 1^{st} radio frame (or another radio frame) for transmitting the preamble information and the second radio frame in the reference super frame, that is, the first radio frame is the 1^{st} radio frame for the preamble information.

Implementation 2: The indication information is carried in a system message transmitted in a super frame. To be specific, in S502, the grant node sends the indication information in a system message in a first super frame, and correspondingly, the terminal node receives the first super frame.

The first super frame is a super frame after preamble information, namely, a super frame for transmitting a data frame. Optionally, the first super frame is the 1^{st} super frame (or may be another super frame) after the preamble information. Generally, earlier indication of the indication information, that is, earlier receiving of the indication information by the terminal node can implement time synchronization between terminal nodes more quickly.

The system message is also sent in a super frame in the discontinuous reception mode. Therefore, in this implementation, the indication information may be carried in the system message transmitted in the super frame. In a possible implementation, in Implementation 1.1, the indication information may also be carried in the system message in the variable-length part of the preamble information. Therefore, in the discontinuous reception mode, if the indication information is configured to be sent in the system message in the variable-length part, the indication information may be configured not to be sent in the system message in the first super frame; or if the indication information is configured not to be sent in the system message in the variable-length part, the indication information may be configured to be sent in the system message in the first super frame. That is, in the discontinuous reception mode, the indication information is configured to be sent in at least one of the system message in the variable-length part and the system message in the first super frame.

A specific meaning of the indication information (for example, a radio frame number field) includes but is not limited to one of the following.

The indication information specifically indicates an offset/a quantity of radio frames between the n^{th} radio frame in a first super frame for transmitting the system message and the second radio frame (for example, the m^{th} radio frame) in the reference super frame, that is, the first radio frame is the 1^{st} radio frame in the first super frame.

The indication information specifically indicates an offset/a quantity of radio frames between the 1^{st} radio frame (or another radio frame) in a plurality of radio frames for transmitting the system message and the second radio frame in the reference super frame, that is, the first radio frame is the 1^{st} radio frame in the plurality of radio frames in the first super frame that are for transmitting the system message, for example, the first radio frame is a first radio frame in a current super frame (for example, the first super frame).

The indication information specifically indicates an offset/a quantity of radio frames between the last radio frame in a plurality of radio frames for transmitting the system message and the second radio frame in the reference super frame, that is, the first radio frame is the last radio frame in the plurality of radio frames in the first super frame that are for transmitting the system message, for example, the first radio frame is the last radio frame in a current super frame (for example, the first super frame).

Implementation 3: The indication information is carried in a time service management frame. To be specific, in S502, the grant node broadcasts the time service management frame, where the time service management frame carries the indication information; and correspondingly, the terminal node receives the time service management frame.

The time service management frame is for a time service. The time service management frame may be a system message, and periodic scheduling is performed in a scheduling manner similar to that of the system message, so that the terminal node can determine time. In a possible implementation, the time service management frame is a newly added system message in the GT system, for example, a grant link time service message Glink-TimeInfo-Message.

For example, the time service management frame may be shown as follows, where the Glink-TimeInfo-Message includes Glink-TimeInfo-Message-IE, and the Glink-TimeInfo-Message-IE includes frameCntInfo.

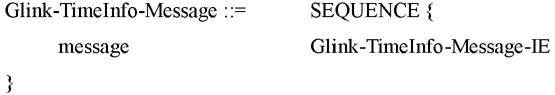

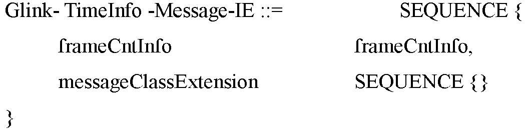

Optionally, frameCntInfo may carry the indication information.

Implementation 4: The indication information is carried in a link control layer header for indication. To be specific, in S502, the grant node sends a link control layer data packet, where the header of the link control layer data packet carries the indication information; and correspondingly, the terminal node receives the link control layer data packet.

Generally, data transmitted at a physical layer is packaged at a link control (link control, LC) layer. The LC layer may include one or more link control entities, and one link control entity corresponds to one logical channel.

The LC layer provides a data transmission service for an upper layer, and supports a plurality of different types of transmission modes. For some supported transmission modes, refer to Table 1.

**Table 1**

| Transmission mode | | Description |
|---|---|---|
| Transmission mode 1 | Transmission mode 1-1 | Add link control layer header information, perform status reporting at a link control layer, and allow splitting of a service data unit (service data unit, SDU) in a link control entity |
| | Transmission mode 1-2 | Add link control layer header information, perform status reporting at a link control layer, and disallow splitting of an SDU in a link control entity |
| Transmission mode 2 | Transmission mode 2-1 | Add link control layer header information, skip performing status reporting at a link control layer, and allow splitting of an SDU in a link control entity |
| | Transmission mode 2-2 | Add link control layer header information, skip performing status reporting at a link control layer, and disallow splitting of an SDU in a link control entity |

Implementation 4.1: When the data is transmitted in the transmission mode 1, the indication information is carried in the header of the link control layer data packet.

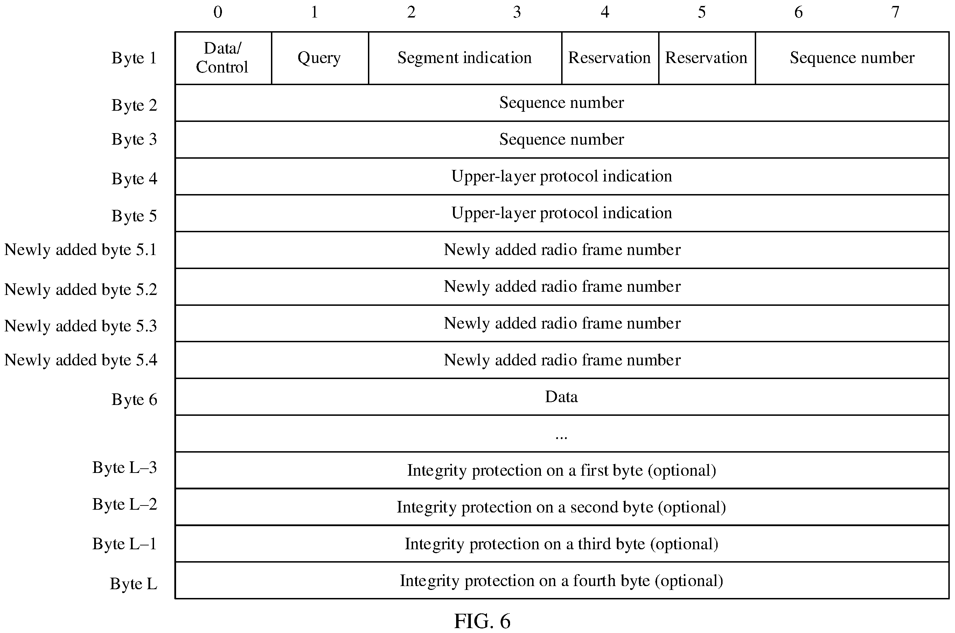

A protocol data unit (protocol data unit, PDU) format in the transmission mode 1 is shown in FIG. 6, and the PDU format does not carry a segment offset value. The PDU format includes L bytes. Different values of a byte 1 indicate different meanings. For example, if the byte 1 is 0, it indicates data/control; if the byte 1 is 1, it indicates query; if the byte 1 is 2 or 3, it indicates a segment indication; if the byte 1 is 4 or 5, it indicates reservation; or if the byte 1 is 6 or 7, it indicates a sequence number. A byte 2 and a byte 3 each indicate a sequence number, a byte 4 and a byte 5 each indicate an upper-layer protocol indication, a byte 6 indicates data, ..., a byte L-3 indicates integrity protection on a first byte (optional), a byte L-2 indicates integrity protection on a second byte (optional), a byte L-1 indicates integrity protection on a third byte (optional), and a byte L indicates integrity protection on a fourth byte (optional). For example, the indication information (for example, newly added radio frame numbers) may be added between the byte 5 and the byte 6 in the PDU format. If the indication information occupies 32 bits, four bytes are newly added between the byte 5 and the byte 6 in the PDU format to indicate the indication information, for example, a newly added byte 5.1 to a newly added byte 5.4 in FIG. 6.

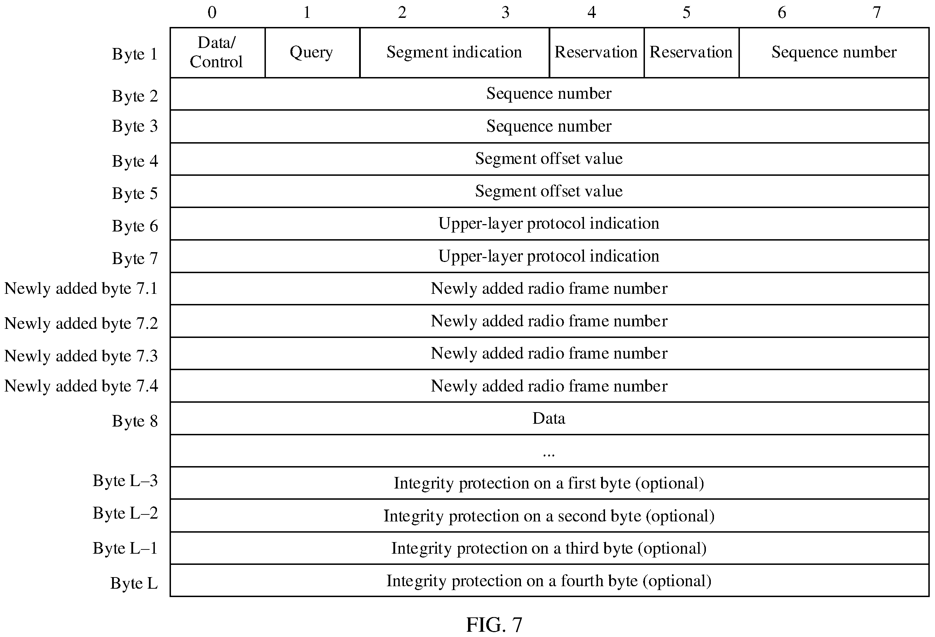

A PDU format in the transmission mode 1 is shown in FIG. 7, and the PDU format carries segment offset values. The PDU format includes L bytes. Different values of a byte 1 indicate different meanings. For example, if the byte 1 is 0, it indicates data/control; if the byte 1 is 1, it indicates query; if the byte 1 is 2 or 3, it indicates a segment indication; if the byte 1 is 4 or 5, it indicates reservation; or if the byte 1 is 6 or 7, it indicates a sequence number. A byte 2 and a byte 3 each indicate a sequence number, a byte 4 and a byte 5 each indicate a segment offset value, a byte 6 and a byte 7 each indicate an upper-layer protocol indication, a byte 8 indicates data, ..., a byte L-3 indicates integrity protection on a first byte (optional), a byte L-2 indicates integrity protection on a second byte (optional), a byte L-1 indicates integrity protection on a third byte (optional), and a byte L indicates integrity protection on a fourth byte (optional). For example, the indication information (for example, newly added radio frame numbers) may be added between the byte 7 and the byte 8 in the PDU format. If the indication information occupies 32 bits, four bytes are newly added between the byte 7 and the byte 8 in the PDU format to indicate the indication information, for example, a newly added byte 7.1 to a newly added byte 7.4 in FIG. 7.

Implementation 4.2: When the data is transmitted in the transmission mode 2, the indication information is carried in the header of the link control layer data packet.

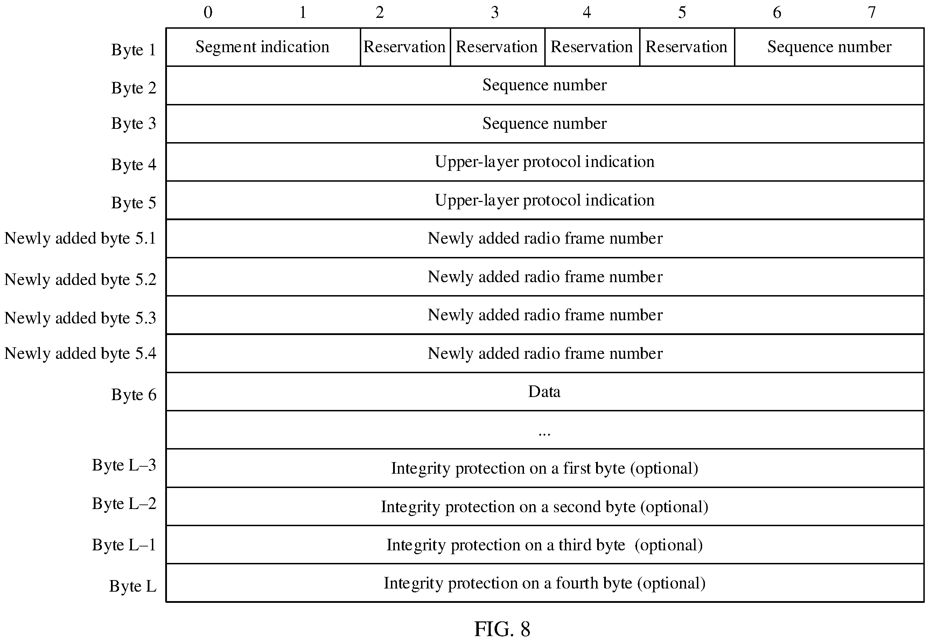

A PDU format in the transmission mode 2 is shown in FIG. 8, and the PDU format does not carry a segment offset value. The PDU format includes L bytes. Different values of a byte 1 indicate different meanings. For example, if the byte 1 is 0 or 1, it indicates a segment indication; if the byte 1 is 2 or 3 or 4 or 5, it indicates reservation; or if the byte 1 is 6 or 7, it indicates a sequence number. A byte 2 and a byte 3 each indicate a sequence number, a byte 4 and a byte 5 each indicate an upper-layer protocol indication, a byte 6 indicates data, ..., a byte L-3 indicates integrity protection on a first byte (optional), a byte L-2 indicates integrity protection on a second byte (optional), a byte L-1 indicates integrity protection on a third byte (optional), and a byte L indicates integrity protection on a fourth byte (optional). For example, the indication information (for example, newly added radio frame numbers) may be added between the byte 5 and the byte 6 in the PDU format. If the indication information occupies 32 bits, four bytes are newly added between the byte 5 and the byte 6 in the PDU format to indicate the indication information, for example, a newly added byte 5.1 to a newly added byte 5.4 in FIG. 8.

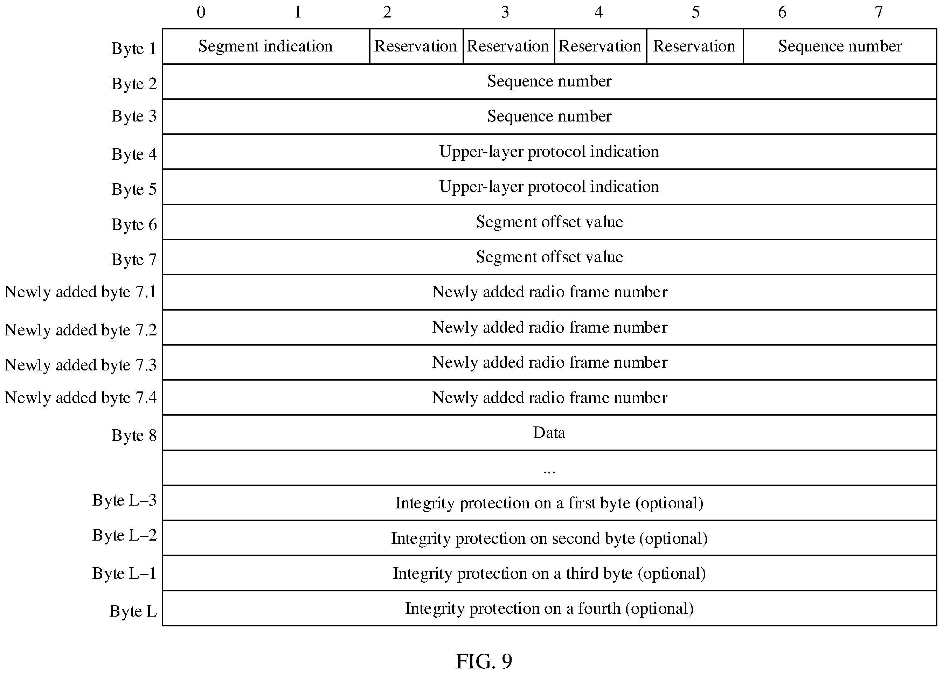

A PDU format in the transmission mode 2 is shown in FIG. 9, and the PDU format carries segment offset values. The PDU format includes L bytes. Different values of a byte 1 indicate different meanings. For example, if the byte 1 is 0 or 1, it indicates a segment indication; if the byte 1 is 2 or 3 or 4 or 5, it indicates reservation; or if the byte 1 is 6 or 7, it indicates a sequence number. A byte 2 and a byte 3 each indicate a sequence number, a byte 4 and a byte 5 each indicate an upper-layer protocol indication, a byte 6 and a byte 7 each indicate a segment offset value, a byte 8 indicates data, ..., a byte L-3 indicates integrity protection on a first byte (optional), a byte L-2 indicates integrity protection on a second byte (optional), a byte L-1 indicates integrity protection on a third byte (optional), and a byte L indicates integrity protection on a fourth byte (optional). For example, the indication information (for example, newly added radio frame numbers) may be added between the byte 7 and the byte 8 in the PDU format. If the indication information occupies 32 bits, four bytes are newly added between the byte 7 and the byte 8 in the PDU format to indicate the indication information, for example, a newly added byte 7.1 to a newly added byte 7.4 in FIG. 9.

According to the communication method provided in embodiments of this application, the terminal node may sense a time offset/time difference between the terminal node and the grant node, to implement time synchronization between the terminal nodes by using the grant node as a reference.

It is assumed that an offset between a first terminal node and the grant node is Δt1, an offset between a second terminal node and the grant node is Δt2, and Δt1 is less than Δt2. To implement time synchronization between the first terminal node and the second terminal node, for example, the grant node may send a data frame to the second terminal node at a first time point, and send the data frame to the first terminal node at a time point (Δt2-Δt1) after the first time point, and the first terminal node and the second terminal node play the data frame after receiving the data frame at a same time point, so that the first terminal node and the second terminal node simultaneously play the data frame. In another instance, the grant node may simultaneously send a data frame to the first terminal node and the second terminal node, the first terminal node plays the data frame at a time point (Δt2-Δt1) after receiving the data frame, and the second terminal node plays the data frame after receiving the data frame, so that the first terminal node and the second terminal node can simultaneously play the data frame.

It may be understood that the implementations provided in embodiments of this application may be used separately, or may be used in combination. The "1^{st} super frame", the "1^{st} radio frame", the "last radio frame", and the like in embodiments of this application are merely examples, and do not constitute a limitation. Other super frame numbers and radio frame numbers that can implement time synchronization between the terminal nodes are also applicable to embodiments of this application.

"And/Or" in this application describes an association relationship for describing associated objects and represents that three relationships may exist. For example, A and/or B may represent the following three cases: Only A exists, both A and B exist, and only B exists. The character "/" generally indicates an "or" relationship between the associated objects.

"A plurality of" in this application means two or more.

In addition, it should be understood that in the description of this application, terms such as "first" and "second" are merely for distinguishing and description, but should not be understood as indicating or implying relative importance, or should not be understood as indicating or implying a sequence.

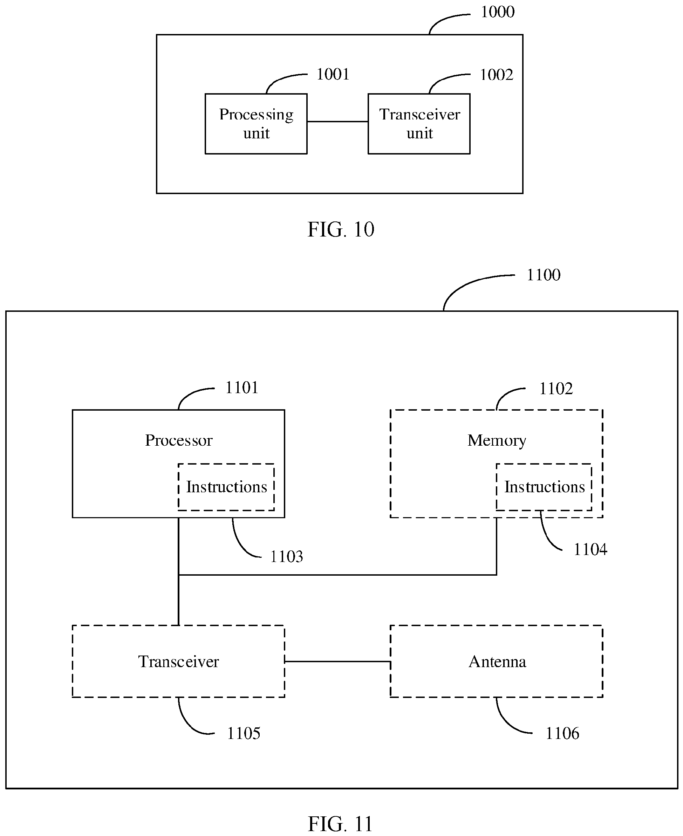

Based on a same technical concept as the foregoing communication method, an embodiment of this application further provides a communication apparatus. As shown in FIG. 10, the communication apparatus 1000 includes a processing unit 1001 and a transceiver unit 1002. The communication apparatus 1000 may be configured to implement the method described in the foregoing method embodiment. The apparatus 1000 is used in a grant node or a terminal node, or may be a chip used in the grant node or the terminal node, or may be used in a device including the grant node or the terminal node.

In an embodiment, the apparatus 1000 is used in the grant node.

Specifically, the processing unit 1001 is configured to determine indication information by using the grant node if in a discontinuous reception mode.

The transceiver unit 1002 is configured to send the indication information by using the grant node, where the indication information indicates an offset between a first radio frame and a second radio frame in a reference super frame, and the first radio frame is related to a moment at which the indication information is sent.

In an implementation, the offset between the first radio frame and the second radio frame in the reference super frame is a quantity of radio frames between the first radio frame and the second radio frame in the reference super frame.

In an implementation, the transceiver unit 1002 is specifically configured to send preamble information, and a variable-length part of the preamble information carries the indication information.

In an implementation, the variable-length part includes a grant link system message Glink-SystemInfo-Message, and the Glink-SystemInfo-Message includes the indication information.

In an implementation, the first radio frame is the 1^{st} radio frame for the variable-length part of the preamble information; or the last radio frame for the variable-length part of the preamble information; or the 1^{st} radio frame in the 1^{st} super frame for transmission after the variable-length part of the preamble information; or the 1^{st} radio frame for the preamble information.

In an implementation, the transceiver unit 1002 is specifically configured to send preamble information, and a fixed-length part of the preamble information carries the indication information.

In an implementation, the first radio frame is the 1^{st} radio frame for the fixed-length part of the preamble information; or the last radio frame for the fixed-length part of the preamble information; or the 1^{st} radio frame in the 1^{st} super frame for transmission after the fixed-length part of the preamble information.

In an implementation, the transceiver unit 1002 is specifically configured to send the indication information in a system message in a first super frame, and the third super frame is the 1^{st} super frame after preamble information.

In an implementation, the first radio frame is the 1^{st} radio frame in the first super frame; or the 1^{st} radio frame in a plurality of radio frames in the first super frame that are for transmitting the system message; or the last radio frame in a plurality of radio frames in the first super frame that are for transmitting the system message.

In an implementation, the transceiver unit 1002 is specifically configured to broadcast a time service management frame, the time service management frame is for a time service, and the time service management frame carries the indication information.

In an implementation, the transceiver unit 1002 is specifically configured to send a link control layer data packet, and a header of the link control layer data packet carries the indication information.

In an embodiment, the apparatus 1000 is used in the terminal node.

Specifically, the transceiver unit 1002 is configured to receive indication information by using the terminal node if in a discontinuous reception mode, where the indication information indicates an offset between a first radio frame and a second radio frame in a reference super frame, and the first radio frame is related to a moment at which the grant node sends the indication information.

The processing unit 1001 is configured to determine the offset between the first radio frame and the second radio frame based on the indication information.

In an implementation, the offset between the first radio frame and the second radio frame in the reference super frame is a quantity of radio frames between the first radio frame and the second radio frame in the reference super frame.

In an implementation, the transceiver unit 1002 is specifically configured to receive preamble information, and a variable-length part of the preamble information carries the indication information.

In an implementation, the variable-length part includes a grant link system message Glink-SystemInfo-Message, and the Glink-SystemInfo-Message includes the indication information.

In an implementation, the first radio frame is the 1^{st} radio frame for the variable-length part of the preamble information; or the last radio frame for the variable-length part of the preamble information; or the 1^{st} radio frame in the 1^{st} super frame for transmission after the variable-length part of the preamble information; or the 1^{st} radio frame for the preamble information.

In an implementation, the transceiver unit 1002 is specifically configured to receive preamble information, and a fixed-length part of the preamble information carries the indication information.

In an implementation, the first radio frame is the 1^{st} radio frame for the fixed-length part of the preamble information; or the last radio frame for the fixed-length part of the preamble information; or the 1^{st} radio frame in the 1^{st} super frame for transmission after the fixed-length part of the preamble information.

In an implementation, the transceiver unit 1002 is specifically configured to receive a first super frame, where a system message in the first super frame carries the indication information, and the first super frame is the 1^{st} super frame after preamble information.

In an implementation, the first radio frame is the 1^{st} radio frame in the first super frame; or the 1^{st} radio frame in a plurality of radio frames in the first super frame that are for transmitting the system message; or the last radio frame in a plurality of radio frames in the first super frame that are for transmitting the system message.

In an implementation, the transceiver unit 1002 is specifically configured to receive a time service management frame, the time service management frame is for a time service, and the time service management frame carries the indication information.

In an implementation, the transceiver unit 1002 is specifically configured to receive a link control layer data packet, and a header of the link control layer data packet carries the indication information.

It should be noted that division into the modules in embodiments of this application is an example, and is merely logical function division. In actual implementation, there may be another division manner. In addition, functional units in embodiments of this application may be integrated into one processing unit, or may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the integrated unit may be stored in a storage medium as a computer software product, and includes several instructions for instructing a computer device (which may be a personal computer, a server, or a network device) or a processor (processor) to perform all or some of the steps of the methods in embodiments of this application.

FIG. 11 is a diagram of a structure of a communication apparatus 1100 according to an embodiment of this application. The communication apparatus 1100 may be configured to implement the method described in the foregoing method embodiment. Refer to the descriptions in the foregoing method embodiment. For example, the communication apparatus 1100 can perform the steps performed by the grant node or the terminal node in the method in FIG. 5.

The communication apparatus 1100 includes one or more processors 1101. The processor 1101 may be a general-purpose processor, a dedicated processor, or the like. For example, the processor may be a baseband processor or a central processing unit. The baseband processor may be configured to process a communication protocol and communication data. The central processing unit may be configured to: control a communication apparatus (for example, a base station, a terminal, or a chip), execute a software program, and process data of the software program. The communication apparatus may include a transceiver unit, configured to input (receive) and output (send) signals. For example, the transceiver unit may be a transceiver or a radio frequency chip.

The communication apparatus 1100 includes one or more processors 1101, and the one or more processors 1101 can implement the method in the foregoing embodiment. Optionally, the processor 1101 may further implement another function in addition to the method shown in the foregoing embodiment.

In a design, the processor 1101 may execute instructions, so that the apparatus 1100 performs the method described in the foregoing method embodiment. All or some of the instructions may be stored in the processor 1101. For example, all or some of instructions 1103 may be stored in the processor 1101, or the instructions 1103 are stored in the processor 1101, and instructions 1104 are stored in a memory 1102 coupled to the processor. The processor 1101 may synchronously execute the instructions 1103 and the instructions 1104, so that the communication apparatus 1100 performs the method described in the foregoing method embodiment. The instructions 1103 and the instructions 1104 are also referred to as computer programs.

In another possible design, the communication apparatus 1100 may further include a circuit, and the circuit may implement the function in the foregoing method embodiment.

In still another possible design, the communication apparatus 1100 may include one or more memories 1102 storing instructions 1104. The instructions may be run on the processor 1101, so that the apparatus 1100 performs the method described in the foregoing method embodiment. Optionally, the memory 1102 may further store data. Optionally, the processor 1101 may also store instructions and/or data. For example, the one or more memories 1102 may store the correspondence described in the foregoing embodiment, or the related parameter, table, or the like in the foregoing embodiment. The processor and the memory may be separately disposed, or may be integrated.

In still another possible design, the apparatus 1100 may further include a transceiver 1105 and an antenna 1106. The processor 1101 may be referred to as a processing unit, and is configured to control the apparatus (a terminal or a base station). The transceiver 1105 may be referred to as a transceiver machine, a transceiver circuit, a transceiver unit, or the like, and is configured to implement sending and receiving functions of the apparatus through the antenna 1106.

The processor may be a general-purpose central processing unit (central processing unit, CPU), a microprocessor, an application-specific integrated circuit (application-specific integrated circuit, ASIC), one or more integrated circuits configured to control program execution of the solutions of this application, a general-purpose processor, a digital signal processor (digital signal processor, DSP), a field programmable gate array (field programmable gate array, FPGA) or another programmable logic device, a discrete gate or transistor logic device, or a discrete hardware component. The processor may implement or perform the methods, the steps, and logical block diagrams that are disclosed in embodiments of this application. The general-purpose processor may be a microprocessor, or the processor may be any conventional processor, or the like. Steps of the methods disclosed with reference to embodiments of this application may be directly performed by a hardware decoding processor, or may be performed by using a combination of hardware and software modules in the decoding processor. The software module may be in a storage medium, and the storage medium is located in a memory.

The memory may be a volatile memory or a non-volatile memory, or may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. By way of example, and not limitation, RAMs in many forms may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (synchronous link DRAM, SLDRAM), and a direct rambus random access memory (Direct Rambus RAM, DR RAM). It should be noted that the memory of the systems and methods described in this specification includes but is not limited to these and any memory of another appropriate type. The memory may independently exist and may be connected to the processor through a communication line. The memory may alternatively be integrated with the processor.

An embodiment of this application further provides a communication system, including a grant node and a terminal node. The grant node and the terminal node may implement the communication method in the foregoing method embodiment.

An embodiment of this application further provides a computer-readable medium. The computer-readable medium stores a computer program. When the computer program is executed by a computer, the communication method in the foregoing method embodiment is implemented.

An embodiment of this application further provides a computer program product, including a computer program. When the computer program is executed by a computer, the communication method in the foregoing method embodiment is implemented.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer instructions are loaded and executed on a computer, all or some of the procedures or functions according to embodiments of this application are generated. The computer may be the foregoing communication apparatus. The computer instructions may be stored in a computer-readable storage medium, or may be transmitted from one computer-readable storage medium to another computer-readable storage medium. The computer-readable storage medium may be the foregoing storage medium or the foregoing memory.

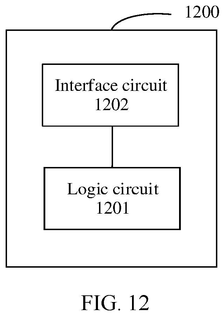

In a possible design, when the communication apparatus is a chip, for example, a chip in a network device, or a chip in a terminal device, the processor 1101 may be one or more logic circuits, and the sending unit, the receiving unit, or the transceiver 1105 may be an input/output interface, or may be referred to as a communication interface, an interface circuit, an interface, or the like. Alternatively, the transceiver 1105 may be a sending unit and a receiving unit. The sending unit may be an output interface, and the receiving unit may be an input interface. The sending unit and the receiving unit are integrated into one unit, for example, an input/output interface. As shown in FIG. 12, a communication apparatus 1200 shown in FIG. 12 includes a logic circuit 1201 and an interface circuit 1202. In other words, the processing unit or the processor 1101 may be implemented by using the logic circuit 1201, and the transceiver unit or the transceiver 1105 may be implemented by using the interface circuit 1202. The logic circuit 1201 may be a chip, a processing circuit, an integrated circuit, a system on chip (system on chip, SoC), or the like. The interface circuit 1202 may be a communication interface, an input/output interface, or the like. In embodiments of this application, the logic circuit may be coupled to the interface circuit. A specific connection manner of the logic circuit and the interface circuit is not limited in embodiments of this application.

In some embodiments of this application, the logic circuit 1201 and the interface circuit 1202 may be configured to perform functions, operations, or the like performed by the grant node or the terminal node. The interface circuit 1202 may be configured to receive a signal from a communication apparatus other than the communication apparatus 1200 and transmit the signal to the logic circuit 1201, or send a signal from the logic circuit 1201 to a communication apparatus other than the communication apparatus 1200. The logic circuit 1201 may be configured to implement the foregoing method embodiment by executing code instructions.

For example, the interface circuit 1202 sends indication information if in a discontinuous reception mode, where the indication information indicates an offset between a first radio frame and a second radio frame in a reference super frame, and the first radio frame is related to a moment at which the indication information is sent. For functions or operations performed by the communication apparatus, refer to the foregoing method embodiment. Details are not described herein again.

A person of ordinary skill in the art may be aware that, in combination with the examples described in embodiments disclosed in this specification, units and algorithm steps can be implemented by electronic hardware, computer software, or a combination thereof. To clearly describe the interchangeability between the hardware and the software, the foregoing has generally described compositions and steps of each example according to functions. Whether the functions are performed by using hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, in other words, may be located in one position, or may be distributed on a plurality of network units. Some or all of the units may be selected according to actual requirements to achieve the objectives of the solutions of embodiments in this application.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

With descriptions of the foregoing implementations, a person skilled in the art may clearly understand that this application may be implemented by hardware, firmware, or a combination thereof. When the present invention is implemented by software, the foregoing functions may be stored in a computer-readable medium or transmitted as one or more instructions or code in the computer-readable medium. The computer-readable medium includes a computer storage medium and a communication medium, where the communication medium includes any medium that enables a computer program to be transmitted from one place to another. The storage medium may be any available medium accessible to a computer.

In conclusion, the foregoing descriptions are merely example embodiments of the technical solutions of this application, but are not intended to limit the protection scope of this application. Any modification, equivalent replacement, or improvement made without departing from the principle of this application shall fall within the protection scope of this application.

## Claims

1. A communication method, applied to a vehicle-mounted wireless short-range communication system comprising a grant node, wherein the method comprises:
determining, by the grant node, indication information if in a discontinuous reception mode; and
sending, by the grant node, the indication information, wherein the indication information indicates an offset between a first radio frame and a second radio frame in a reference super frame, and the first radio frame is related to a moment at which the indication information is sent.

2. The method according to claim 1, wherein the offset between the first radio frame and the second radio frame in the reference super frame is a quantity of radio frames between the first radio frame and the second radio frame in the reference super frame.

3. The method according to claim 1 or 2, wherein the sending, by the grant node, the indication information comprises:
sending, by the grant node, preamble information, wherein a variable-length part of the preamble information carries the indication information.

4. The method according to claim 3, wherein the variable-length part comprises a grant link system message Glink-SystemInfo-Message, and the Glink-SystemInfo-Message comprises the indication information.

5. The method according to claim 3 or 4, wherein the first radio frame is:
the 1^{st} radio frame for the variable-length part of the preamble information; or
the last radio frame for the variable-length part of the preamble information; or
the 1^{st} radio frame in the 1^{st} super frame for transmission after the variable-length part of the preamble information; or
the 1^{st} radio frame for the preamble information.

6. The method according to claim 1 or 2, wherein the sending, by the grant node, the indication information comprises:
sending, by the grant node, preamble information, wherein a fixed-length part of the preamble information carries the indication information.

7. The method according to claim 6, wherein the first radio frame is:
the 1^{st} radio frame for the fixed-length part of the preamble information; or
the last radio frame for the fixed-length part of the preamble information; or
the 1^{st} radio frame in the 1^{st} super frame for transmission after the fixed-length part of the preamble information.

8. The method according to claim 1 or 2, wherein the sending, by the grant node, the indication information comprises:
sending, by the grant node, the indication information in a system message in a first super frame, wherein the first super frame is the 1^{st} super frame after preamble information.

9. The method according to claim 8, wherein the first radio frame is:
the 1^{st} radio frame in the first super frame; or
the 1^{st} radio frame in a plurality of radio frames in the first super frame that are for transmitting the system message; or
the last radio frame in a plurality of radio frames in the first super frame that are for transmitting the system message.

10. The method according to claim 1 or 2, wherein the sending, by the grant node, the indication information comprises:
broadcasting, by the grant node, a time service management frame, wherein the time service management frame is for a time service, and the time service management frame carries the indication information.

11. The method according to claim 1 or 2, wherein the sending, by the grant node, the indication information comprises:
sending, by the grant node, a link control layer data packet, wherein a header of the link control layer data packet carries the indication information.

12. A communication method, applied to a vehicle-mounted wireless short-range communication system comprising a terminal node, wherein the method comprises:
receiving, by the terminal node, indication information if in a discontinuous reception mode, wherein the indication information indicates an offset between a first radio frame and a second radio frame in a reference super frame, and the first radio frame is related to a moment at which the indication information is sent; and
determining, by the terminal node, the offset between the first radio frame and the second radio frame based on the indication information.

13. The method according to claim 12, wherein the offset between the first radio frame and the second radio frame in the reference super frame is a quantity of radio frames between the first radio frame and the second radio frame in the reference super frame.

14. The method according to claim 12 or 13, wherein the receiving, by the terminal node, indication information comprises:
receiving, by the terminal node, preamble information, wherein a variable-length part of the preamble information carries the indication information.

15. The method according to claim 14, wherein the variable-length part comprises a grant link system message Glink-SystemInfo-Message, and the Glink-SystemInfo-Message comprises the indication information.

16. The method according to claim 14 or 15, wherein the first radio frame is:
the 1^{st} radio frame for the variable-length part of the preamble information; or
the last radio frame for the variable-length part of the preamble information; or
the 1^{st} radio frame in the 1^{st} super frame for transmission after the variable-length part of the preamble information; or
the 1^{st} radio frame for the preamble information.

17. The method according to claim 12 or 13, wherein the receiving, by the terminal node, indication information comprises:
receiving, by the terminal node, preamble information, wherein a fixed-length part of the preamble information carries the indication information.

18. The method according to claim 17, wherein the first radio frame is:
the 1^{st} radio frame for the fixed-length part of the preamble information; or
the last radio frame for the fixed-length part of the preamble information; or
the 1^{st} radio frame in the 1^{st} super frame for transmission after the fixed-length part of the preamble information.

19. The method according to claim 12 or 13, wherein the receiving, by the terminal node, indication information comprises:
receiving, by the terminal node, a first super frame, wherein a system message in the first super frame carries the indication information, and the first super frame is the 1^{st} super frame after preamble information.

20. The method according to claim 19, wherein the first radio frame is:
the 1^{st} radio frame in the first super frame; or
the 1^{st} radio frame in a plurality of radio frames in the first super frame that are for transmitting the system message; or
the last radio frame in a plurality of radio frames in the first super frame that are for transmitting the system message.

21. The method according to claim 12 or 13, wherein the receiving, by the terminal node, indication information comprises:
receiving, by the terminal node, a time service management frame, wherein the time service management frame is for a time service, and the time service management frame carries the indication information.

22. The method according to claim 12 or 13, wherein the receiving, by the terminal node, indication information comprises:
receiving, by the terminal node, a link control layer data packet, wherein a header of the link control layer data packet carries the indication information.

23. A communication apparatus, used in a vehicle-mounted wireless short-range communication system and comprising:
a processing unit, configured to determine indication information if in a discontinuous reception mode; and
a transceiver unit, configured to send the indication information, wherein the indication information indicates an offset between a first radio frame and a second radio frame in a reference super frame, and the first radio frame is related to a moment at which the indication information is sent.

24. The apparatus according to claim 23, wherein the offset between the first radio frame and the second radio frame in the reference super frame is a quantity of radio frames between the first radio frame and the second radio frame in the reference super frame.

25. The apparatus according to claim 23 or 24, wherein the transceiver unit is specifically configured to send preamble information, and a variable-length part of the preamble information carries the indication information.

26. The apparatus according to claim 25, wherein the variable-length part comprises a grant link system message Glink-SystemInfo-Message, and the Glink-SystemInfo-Message comprises the indication information.

27. The apparatus according to claim 25 or 26, wherein the first radio frame is:
the 1^{st} radio frame for the variable-length part of the preamble information; or
the last radio frame for the variable-length part of the preamble information; or
the 1^{st} radio frame in the 1^{st} super frame for transmission after the variable-length part of the preamble information; or
the 1^{st} radio frame for the preamble information.

28. The apparatus according to claim 23 or 24, wherein the transceiver unit is specifically configured to send preamble information, and a fixed-length part of the preamble information carries the indication information.

29. The apparatus according to claim 28, wherein the first radio frame is:
the 1^{st} radio frame for the fixed-length part of the preamble information; or
the last radio frame for the fixed-length part of the preamble information; or
the 1^{st} radio frame in the 1^{st} super frame for transmission after the fixed-length part of the preamble information.

30. The apparatus according to claim 23 or 24, wherein the transceiver unit is specifically configured to send the indication information in a system message in a first super frame, and the first super frame is the 1^{st} super frame after preamble information.

31. The apparatus according to claim 30, wherein the first radio frame is:
the 1^{st} radio frame in the first super frame; or
the 1^{st} radio frame in a plurality of radio frames in the first super frame that are for transmitting the system message; or
the last radio frame in a plurality of radio frames in the first super frame that are for transmitting the system message.

32. The apparatus according to claim 23 or 24, wherein the transceiver unit is specifically configured to broadcast a time service management frame, the time service management frame is for a time service, and the time service management frame carries the indication information.

33. The apparatus according to claim 23 or 24, wherein the transceiver unit is specifically configured to send a link control layer data packet, and a header of the link control layer data packet carries the indication information.

34. A communication apparatus, used in a vehicle-mounted wireless short-range communication system and comprising:
a transceiver unit, configured to receive indication information if in a discontinuous reception mode, wherein the indication information indicates an offset between a first radio frame and a second radio frame in a reference super frame, and the first radio frame is related to a moment at which the grant node sends the indication information; and
a processing unit, configured to determine the offset between the first radio frame and the second radio frame based on the indication information.

35. The apparatus according to claim 34, wherein the offset between the first radio frame and the second radio frame in the reference super frame is a quantity of radio frames between the first radio frame and the second radio frame in the reference super frame.

36. The apparatus according to claim 34 or 35, wherein the transceiver unit is specifically configured to receive preamble information, and a variable-length part of the preamble information carries the indication information.

37. The apparatus according to claim 36, wherein the variable-length part comprises a grant link system message Glink-SystemInfo-Message, and the Glink-SystemInfo-Message comprises the indication information.

38. The apparatus according to claim 36 or 37, wherein the first radio frame is:
the 1^{st} radio frame for the variable-length part of the preamble information; or
the last radio frame for the variable-length part of the preamble information; or
the 1^{st} radio frame in the 1^{st} super frame for transmission after the variable-length part of the preamble information; or
the 1^{st} radio frame for the preamble information.

39. The apparatus according to claim 34 or 35, wherein the transceiver unit is specifically configured to receive preamble information, and a fixed-length part of the preamble information carries the indication information.

40. The apparatus according to claim 39, wherein the first radio frame is:
the 1^{st} radio frame for the fixed-length part of the preamble information; or
the last radio frame for the fixed-length part of the preamble information; or
the 1^{st} radio frame in the 1^{st} super frame for transmission after the fixed-length part of the preamble information.

41. The apparatus according to claim 34 or 35, wherein the transceiver unit is specifically configured to receive a first super frame, a system message in the first super frame carries the indication information, and the first super frame is the 1^{st} super frame after preamble information.

42. The apparatus according to claim 41, wherein the first radio frame is:
the 1^{st} radio frame in the first super frame; or
the 1^{st} radio frame in a plurality of radio frames in the first super frame that are for transmitting the system message; or
the last radio frame in a plurality of radio frames in the first super frame that are for transmitting the system message.

43. The apparatus according to claim 34 or 35, wherein the transceiver unit is specifically configured to receive a time service management frame, the time service management frame is for a time service, and the time service management frame carries the indication information.

44. The apparatus according to claim 34 or 35, wherein the transceiver unit is specifically configured to receive a link control layer data packet, and a header of the link control layer data packet carries the indication information.

45. A communication apparatus, comprising a processor, wherein the processor is coupled to a memory; and
the processor is configured to execute a computer program stored in the memory, so that the apparatus performs the method according to any one of claims 1 to 22.

46. A computer-readable storage medium, comprising a computer program, wherein when the computer program is run on a computer, the method according to any one of claims 1 to 22 is performed.

47. A communication apparatus, wherein the communication apparatus comprises a logic circuit and an interface circuit;
the interface circuit is configured to communicate with a module outside the communication apparatus; and
the logic circuit is configured to execute a computer program, so that the communication apparatus performs the method according to any one of claims 1 to 22.

48. A computer program product, comprising a computer program, wherein when the computer program is run on a computer, the method according to any one of claims 1 to 22 is performed.

49. A communication system, comprising a grant node configured to perform the method according to any one of claims 1 to 11, and a terminal node configured to perform the method according to any one of claims 12 to 22.

50. A chip system, wherein the chip system comprises:
a processor and a memory, wherein the processor is coupled to the memory, the memory is configured to store a program or instructions, and when the program or the instructions are executed by the processor, the method according to any one of claims 1 to 22 is implemented.
